# EUROPÄISCHE PATENTSCHRIFT

(11) **EP 0 744 319 B1**
(45) Veröffentlichungstag und Bekanntmachung des Hinweises auf die Patenterteilung: **10.07.2002**
(21) Anmeldenummer: 96108198.1
(22) Anmeldetag: 22.05.1996
(51) Int. Cl.: B60R 1/06, B60Q 1/26

(54) **Kappe für einen Aussenspiegel**
Cap for external mirror
Couvercle pour mirroir extérieur

(30) Priorität: 24.05.1995 DE 29508621 U
(43) Veröffentlichungstag der Anmeldung: 27.11.1996
(73) Patentinhaber: Donnelly Hohe GmbH & Co. KG, 97903 Collenberg (DE)
(72) Erfinder: Fürst, Peter, 63927 Bürgstadt (DE)
(74) Vertreter: Zinngrebe, Horst, Dr.rer.nat.

(56) Entgegenhaltungen:
- US-A- 2 200 168
- PATENT ABSTRACTS OF JAPAN vol. 95, no. 7, 31.August 1995 & JP 07 108875 A (KOKONE LOMB), 25.April 1995,

## Beschreibung

Die Erfindung betrifft eine Kappe für einen Fahrzeugaußenspiegel.

Eine derartige Kappe ist beispielsweise aus der deutschen Gebrauchsmusterschrift G 89 14 759.6 bekannt und dient dazu, auf einen stabilen Träger, an welchem ein Rückspiegel befestigt ist, aufgesteckt zu werden.

In der deutschen Gebrauchsmusterschrift G 94 09 566.3 wird vorgeschlagen, die Kappe lichtdurchlässig auszuführen. Ferner ist in dem Fahrzeugaußenspiegel eine Beleuchtungseinrichtung mit Leuchtdioden oder lichtreflektierenden Materialien vorgesehen. Damit soll erreicht werden, daß stehende und fahrende, insbesondere aufeinander zufahrende Autos in ihrer Position von außen genauer zu bestimmen sind. Diese Vorrichtung ist relativ aufwendig, wobei in modernen Außenspiegeln mit elektrisch verstellbarem Spiegelglas im Inneren des von der Kappe sowie dem Träger und dem Rückspiegel umschlossenen Raumes kaum Platz für eine derartige Beleuchtungseinrichtung vorhanden ist.

In der japanischen Veröffentlichung 07108875 wird empfohlen, auf die Außenseite eines Automobils eine selbstleuchtende Farbe an den Rädern, Vorder- und Rückleuchten, einem Seitenschutz und einem Rückspiegel oder Kopfstützen anzubringen, um das Fahrzeug auch bei Nacht leichter sichtbar zu machen. Nachteilig ist, dass die selbst leuchtende Farbe nach längerer Benutzung des Fahrzeuges abgerieben und damit verschwunden ist.

In der US-A-Patentschrift 2,200,168 werden reflektierende Elemente in einem einen kreisförmigen Außenrückspiegel umgebenden Ring gehalten. Eine derartige Befestigung von rückstrahlenden Elementen ist jedoch hochgradig instabil.

Der Erfindung liegt demgegenüber die Aufgabe zugrunde, die Position eines Fahrzeuges für Dritte mit einfacheren Mitteln leichter erkennbar zu machen.

Dazu ist erfindungsgemäß vorgesehen, dass auf die Kappe lichtreflektierende Mittel aufgebracht sind, wobei die lichtreflektierenden Mittel Rückstrahler sind, die vollflächig oder in einzelnen Bereichen in die Innenfläche der durchscheinenden Kappe eingeformt sind. Zweckmäßig ist die Rückfläche der Rückstrahler als Tripelspiegel ausgeführt. Vorteilhaft ist ferner, wenn die Rückfläche der Rückstrahler mit einer Metallbeschichtung versehen ist.

Im übrigen sind bevorzugte Ausführungsformen der Erfindung in den beigefügten Unteransprüchen angegeben.

Die Erfindung wird nachstehend anhand der in der beigefügten Zeichnung dargestellten Ausführungsbeispiele im einzelnen beschrieben. Es zeigen:
- Fig. 1: eine schematische Darstellung eines nicht erfindungsgemässen Spiegelgehäuses mit teilflächigem Rückstrahler;
- Fig. 2: eine schematische Darstellung einer Ausführungsform der Erfindung mit Ausschnittsvergrößerung; und
- Fig. 3: einen schematischen Schnitt durch das Spiegelgehäuse gemäß Fig. 2.

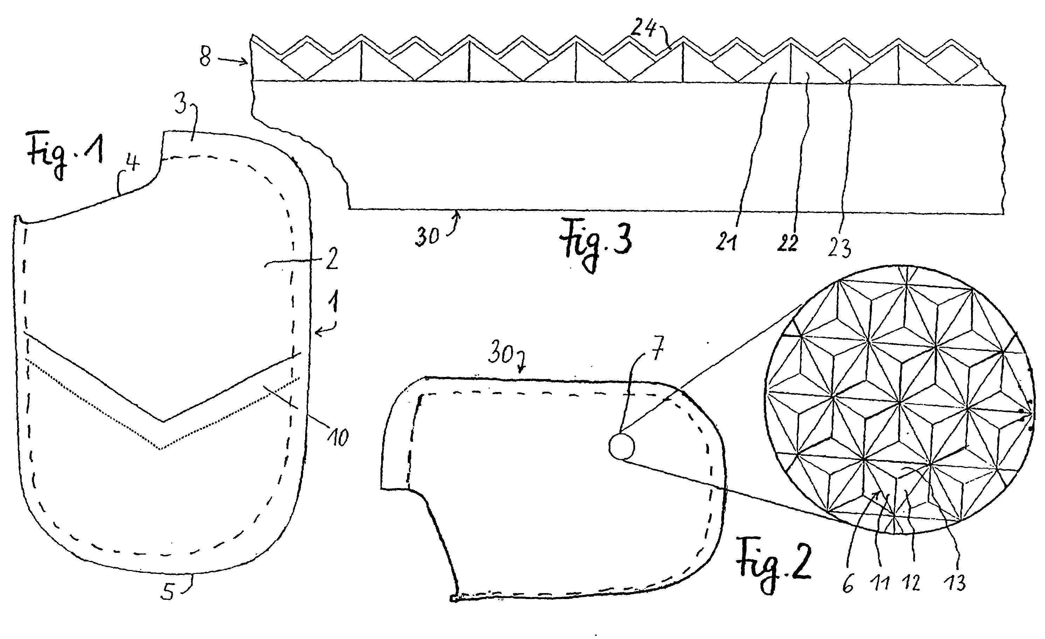

Fig. 1 zeigt in Draufsicht gegen Fahrtrichtung eine Kappe 1, die eine konvexe Hauptaußenfläche 2 sowie einen umlaufenden Rand 3 aufweist. Die Kappe 1 ist dazu bestimmt, auf eine Trägerplatte eines Fahrzeugaußenspiegels über an die Innenseite der Kappe 1 angeformte Rastfinger aufgeklemmt zu werden und damit das Spiegelgehäuse des Außenspiegels zu komplettieren. Der Ausschnitt 4 in einem Eckbereich der Kappe 1 berücksichtigt die Verkleidung des nicht dargestellten Spiegelfusses, über den der Fahrzeugaußenspiegel an der Fahrzeugkarosserie befestigt werden kann.

Die aus hartem Kunststoff bestehende und in Abstimmung mit der Karosserielackierung des Fahrzeuges lackierte Kappe 1 weist auf ihrer Hauptaußenfläche 2 einen V-förmigen Streifen 10 aus einem lichtreflektierenden Lack auf, der sich über die ganze Breite der Hauptaußenfläche 2 der Kappe 1 erstreckt und mit der Pfeilspitze von dem Ausschnitt 4 und damit von dem Fahrzeug wegweist. Der lichtreflektierende Lack des Streifens 10 kann in der Farbe der Kappe gehalten sein, jedoch eine Vielzahl kleiner lichtreflektierender Pellets enthalten.

In einer anderen Ausführungsart der Erfindung kommt die ganzflächige Beschichtung der Hauptaußenfläche 2 und Rand 3 mit einem lichtreflektierenden Lack in Betracht. Diese Ausführungsform hat nicht nur den Vorteil einer großflächigeren Lichtreflexion, sondern ermöglicht auch, daß die Kappe am seitlichen, äußeren Randbereich 5 bei Seitenansicht des Fahrzeuges bei Nacht zu erkennen ist und somit auch eine seitliche Sichtbarkeitsmarke etwa für ein abgestelltes Fahrzeug bildet. Alternativ kommt in Betracht, daß eine fluoreszierende Lackschicht für die Hauptaußenfläche 2 und gegebenenfalls den Rand 3 oder den Streifen 10 verwendet wird.

In anderer Ausführungsform der Erfindung kann die Spiegelkappe 30 als Vollreflektor ausgeführt sein, d. h. unter Einsatz von entsprechenden Klarsicht-Kunststoffen (zum Beispiel Polycarbonat, PMMA, transparenten Polyamiden) wird ein Rückstrahler in Form und Funktion einer Spiegelkappe ausgebildet. Durch ein entsprechendes Spritzwerkzeug wird die Kappe aus einem Guß hergestellt. Die Ausführung der Reflektor-Elemente ist analog den heute üblichen Kunststoff-Rückstrahlern. Viele kleine Tripelspiegel, von denen einer gemäß Fig. 3 drei senkrecht aufeinander stehende, reflektierende Flächen 21, 22, 23 aufweist, sind an der Innenwandung der transparenten Spiegelkappe 30 aneinander gereiht und bedecken die gesamte Innenfläche. In der Ausschnittsvergrößerung der Innenfläche 7 der Kappe 30 ist die vollflächige Aneinanderreihung 8 der aus den zu einander senkrechten Teilflächen 11, 12, 13 bestehenden Tripelspiegel 6 zu erkennen. Durch die sehr glatte Oberfläche dieser Tripelspiegel erreicht man das gewünschte Reflexionsverhalten. Zusätzlich kann die Außenfläche dieser Tripelspiegel noch metallisch, wie bei 24 angedeutet, beschichtet werden, wodurch die Reflexionseigenschaften noch verbessert werden. Als Beschichtung kann zum Beispiel Chrom im Galvanic-Verfahren oder Aluminium im Bedampfungsverfahren aufgebracht werden.

Eine derartige Beschichtung kann sowohl ganzflächig auf die Rückfläche der Rüchstrahler aufgebracht werden, als auch nur abschnittweise beispielsweise durch Aufbringen eines kleinen Reflektorkreises auf der Außenseite der Kappe 30.

## Patentansprüche

1. Kappe für einen Fahrzeugaußenspiegel, **dadurch gekennzeichnet, dass** auf die Kappe (30) Licht reflektierende Mittel (6, 7, 8) aufgebracht sind, wobei die Licht reflektierenden Mittel Rückstrahler sind, die vollflächig (8) oder in einzelnen Bereichen (7) in die Innenfläche der durchscheinenden Kappe (30) eingeformt sind.

2. Kappe nach Anspruch 1, **dadurch gekennzeichnet, dass** die, Rückfläche der Rückstrahler als Tripelspiegel (6, 8) ausgeführt ist.

3. Kappe nach Anspruch 1 oder 2, **dadurch gekennzeichnet, dass** die Rückfläche der Rückstrahler mit einer Metallbeschichtung (24) versehen ist.

## Claims

1. Cap for a vehicle's external mirror,
**characterised in that**
fitted to the cap (30) are light-reflecting means (6, 7, 8), wherein the light-reflecting means are reflectors which are moulded into the internal surface of the translucent cap (30) either over the entire area (8) or in individual areas (7).

2. Cap in accordance with claim 1,
**characterised in that**
the rear surface of the reflector is designed as a triple mirror (6, 8).

3. Cap in accordance with claim 1 or 2,
**characterised in that**
the rear surface of the reflector is equipped with a metal coating (24).

## Revendications

1. Capot pour un rétroviseur extérieur de véhicule, **caractérisé en ce que** des moyens de réflexion de lumière (6, 7, 8) sont appliqués sur le capot (30), lesquels moyens de réflexion de lumière sont des réflecteurs, qui sont formés d'un seul tenant soit sur toute la surface (8) soit dans des zones individuelles (7) de la surface intérieure du capot transparent (30).

2. Capot selon la revendication 1, **caractérisé en ce que** la surface arrière des réflecteurs est réalisée en tant que miroir triple ou en trièdre (6, 8).

3. Capot selon la revendication 1 ou 2, **caractérisé en ce que** la surface arrière des réflecteurs est pourvue d'un revêtement métallique (24).
